# EUROPEAN PATENT APPLICATION

(11) **EP 1 111 556 A2**
(43) Date of publication of application: **27.06.2001**
(21) Application number: 00126545.3
(22) Date of filing: 11.12.2000
(51) Int. Cl.: G07F 7/10, G06K 19/073

(54) **Encryption display card**

(30) Priority: 20.12.1999 JP 36062599
(71) Applicant: Iwaki Electronics Co., Ltd., Tokyo 105-0004 (JP)
(72) Inventor: Yamamoto, Hiroyasu, Iwaki Electronics Co., Ltd., Minato-ku, Tokyo (JP); Shimizu, Takakuni, Iwaki Electronics Co., Ltd., Minato-ku, Tokyo (JP); Koibuchi, Misako, Iwaki Electronics Co., Ltd., Minato-ku, Tokyo (JP)
(74) Representative: Klingseisen, Franz, Dipl.-Ing.

(57) **Abstract**

There is provided an easy-to-carry encryption display card which can generate and store a random encryption and display the encryption when the user wishes to check the encryption. The encryption display card has a main body of a thin plate and includes: a control circuit 2 for switching between two modes including an encryption registration mode and an encryption search mode; input keys 7 for accepting an input of label data; an encryption generating unit 22 for, upon input of the label data in the encryption registration mode, generating a random encryption for a label equivalent to the label data; a RAM 3 for storing the encryption in a one-to-one correspondence with the label; and a display panel 6 for, upon input of the label data in the encryption search mode, displaying the encryption for the label equivalent to the label data. A random encryption is generated by merely inputting the label data when registering an encryption, and the target encryption is displayed by merely inputting the label data when searching the encryption.

## Description

### BACKGROUND OF THE INVENTION

The present invention relates to an easy-to-carry encryption (that is, code or cryptogram) display card for generating and storing a random encryption and displaying the encryption whenever the user wishes to check the encryption.

In today's highly developed information society, people have to manage their private encryptions, such as PINs (Personal Identification Numbers) of bank cash cards or credit cards, and passwords for protecting private information. If one forgets his or her encryption, it is quite difficult to authenticate his or her personal identification. Thus, people tend to choose encryptions that are easy to remember and relate the encryptions to their private information (birthday, address, telephone number, name, etc.) without fully concerning the safety thereof.

However, the encryptions chosen in the above manner are readily inferred by a third party, thereby having quite a high risk of decryption. For this reason, a method of ensuring security has been proposed, in which a random encryption is generated by running an encryption generating software program on a personal computer and stored in a memory device of the personal computer.

However, if one wishes to check his or her encryption stored in the memory device of the personal computer, the personal computer must be close at hand. Although the personal computers have been downsized considerably, in case such that the user withdraws money with his or her cash-card from the ATM (Automatic Teller Machine) at a bank or makes credit-card purchases at a member store, they are still too large to carry around and by no means practically useful.

### SUMMARY OF THE INVENTION

The present invention has been devised to solve the above problems, and therefore, has an object to provide a highly secure, easy-to-carry, and practically useful encryption display card.

More specifically, an encryption display card (1) of the present invention comprises: a main body (9) of a thin plate; mode switching means (control circuit 2, etc.) for switching between two modes including an encryption registration mode and an encryption search mode; label input means (input keys 7, etc.) for accepting an input of label data; encryption generating means (encryption generating unit 22, etc.) for, upon input of the label data through said label input means in the encryption registration mode, generating a random encryption for a label equivalent to the label data; encryption storage means (RAM 3, etc.) for storing the encryption generated by said encryption generating means in a one-to-one correspondence with the label; and display means (display panel 6, etc.) for, upon input of the label data through said label input means in the encryption search mode, displaying the encryption corresponding to the label equivalent to the label data with reference to said encryption storage means. By adopting the above arrangement, when the user wishes to register an encryption, the encryption display card (1) generates and stores a random encryption if the user merely inputs label data, and on the other hand, when the user wishes to search an encryption, the encryption display card (1) displays the target encryption if the user merely inputs the label data.

Also, an encryption display card (1) of the present invention comprises: a main body (9) of a thin plate; mode switching means (control circuit 2, etc.) for switching between two modes including an encryption registration mode and an encryption search mode; label input means (input keys 7, etc.) for accepting an input of label data; digit number specifying means (input keys 7, etc.) for accepting a specific digit number of an encryption; encryption generating means (encryption generating unit 22, etc.) for, when the digit number of an encryption is specified through said digit number specifying means upon input of the label data through said label input means in the encryption registration mode, generating a random encryption of a specified digit number for a label equivalent to the label data; encryption storage means (RAM 3, etc.) for storing the encryption generated by said encryption generating means in a one-to-one correspondence with the label; and display means (display panel 6, etc.) for, upon input of the label data through said label input means in the encryption search mode, displaying the encryption corresponding to the label equivalent to the label data with reference to said encryption storage means. According to the above arrangement, when the user wishes to register an encryption, the encryption display card (1) generates and stores a random encryption of a desired digit number if the user merely inputs the label data. On the other hand, when the user wishes to search an encryption, the encryption display card (1) displays the target encryption if the user merely inputs the label data.

Also, the encryption display card (1) of the present invention is arranged in such a manner that said encryption storage means is capable of storing more than one encryption. The above arrangement makes the encryption display card (1) more useful when managing a great number of encryptions.

In addition, the encryption display card (1) of the present invention is arranged in such a manner that said encryption generating means generates a random encryption by using a natural random number or a pseudo-random number.

Further, the encryption display card (1) of the present invention further comprises: password input means (input keys 7, etc.) for accepting an input of operation enable password data; and personal identification authenticating means (main control unit 21, etc.) for, upon input of the operation enable password data through said password input means, storing the operation enable password data in password storage means (RAM 3, etc.) as an operation enable password when said encryption display card is used for a first time, said personal identification authenticating means also for, when said encryption display card is used for a second time or beyond, enabling operations thereafter only if input operation enable password data coincides with the operation enable password stored in said password storage means. According to the above arrangement, the encryption display card does not allow fraudulent use by a third party once the operation enable password data is set.

### BRIEF EXPLANATION OF THE DRAWINGS

Fig. 1 is a perspective view showing one embodiment of an encryption display card of the present invention.

Fig. 2 is a control block diagram of the encryption display card shown in Fig. 1.

Fig. 3 is a flowchart detailing an operation program installed in the encryption display card shown in Fig. 1.

Fig. 4 is a schematic view showing an example pair of label and encryption.

### PREFERRED EMBODIMENTS OF THE INVENTION

The following description will describe one embodiment of the present invention with reference to the accompanying drawings.

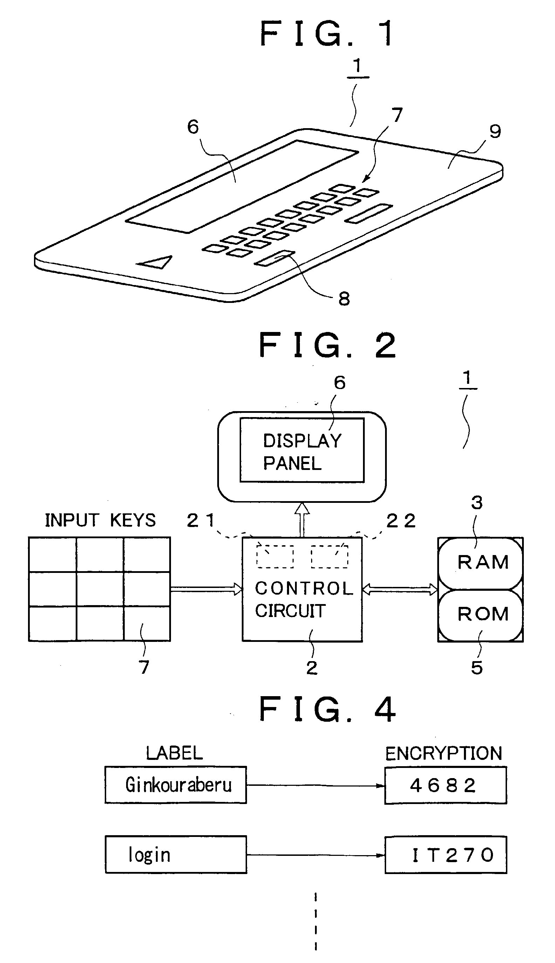

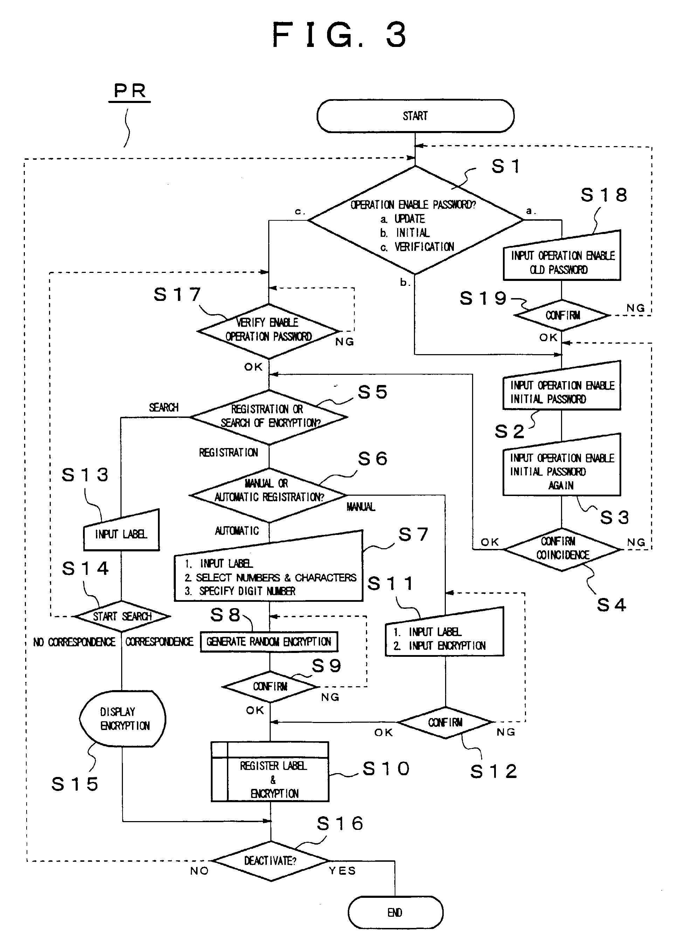

Fig. 1 is a perspective view showing one embodiment of an encryption display card of the present invention, and Fig. 2 is a control block diagram of the encryption display card shown in Fig. 1. Fig. 3 is a flowchart detailing an operation program installed in the encryption display card shown in Fig. 1, and Fig. 4 is a schematic view illustrating an example pair of label and encryption.

As shown in Fig. 1, an encryption display card 1 has a main body 9 of a thin plate of the size of a credit card (width: 54 mm, length: 85 mm, thickness: 0.7 mm), and its surface is provided with a power source switch 8, a plurality of input keys 7, a display panel 6 that displays alphanumeric characters of up to a certain digit number (for example, 12 digits), etc. Also, as shown in Fig. 2, a control circuit 2, a RAM (Random Access Memory) 3, and a ROM (Read Only Memory) 5 are incorporated in the main body 9. The control circuit 2 is provided with a main control unit 21 and an encryption generating unit 22. The encryption generating unit 22 is furnished with a function to generate a random encryption by using a natural random number or a pseudo-random number. On the other hand, the RAM 3 can store more than one type of data (an operation enable password, a label, an encryption, etc., all of which will be described below), and the ROM 5 stores an operation program PR. It should be appreciated that, because the RAM 3 is a non-volatile memory (for example, FRAM), data stored in the RAM 3 will not be lost when the power source switch 8 is turned OFF.

When the user wishes to use the encryption display card 1 arranged in the above manner, he or she pushes the power source switch 8. Then, the control circuit 2 in the encryption display card 1 reads out the operation program PR detailed in Fig. 3 from the ROM 5, and as will be described in detail below, carries out the functions furnished therewith (generation, registration, search, and display of the encryption) while securing safety by adequately switching among four modes: an operation enable initial password generation mode, an operation enable password update mode, an encryption registration mode, and an encryption search mode.

In the first place, if the encryption display card 1 is used for the first time, the main control unit 21 proceeds to Step S1 in the operation program PR when the power source switch 8 is pushed, and judges whether an operation enable password has been set or not with reference to the RAM 3. The operation enable password referred to herein means a password used in authenticating the personal identification of the user as the authorized owner of the encryption display card 1 to prevent fraudulent use by a third party, and it can be set or updated as the user wishes by combining numbers and characters.

Because the encryption display card 1 is used for the first time herein, it is judged that the operation password has not been set. Then, the mode is switched to the operation enable initial password generation mode to set an operation enable initial password, after which the main control unit 21 proceeds to Step S2 in the operation program PR and displays a message on the display panel 6 to request the user to input operation enable password data. Accordingly the user inputs his or her desired operation enable password data by pushing the input keys 7, upon which the main control unit 21 proceeds to Step S3 in the operation program PR, and displays a message on the display panel 6 to request the user to input the operation enable password data again. Accordingly, the user inputs the same operation enable password data by pushing the input keys 7 again. Subsequently, the main control unit 21 proceeds to Step S4 in the operation program PR, and compares the operation enable password data inputted first with the one inputted second to check whether the former and the latter coincide with each other. If the former and the latter do not coincide with each other, it means that the user inputted unintended operation enable password data either in the first or second time by pushing the input key(s) 7 erroneously, and the main control unit 21 can not determine whether the first one or second one should be selected. Thus, the main control unit 21 returns to Steps S2 and S3 in the operation program PR, and requests the user to input the operation enable password data from the start. Only when the first one and second one coincide with each other, the main control unit 21 determines the operation enable password thus inputted as the operation enable password of the encryption display card 1, and writes the same in the RAM 3 to be stored therein.

Once the operation enable initial password is set in the above manner, the functions furnished with the encryption display card 1 become available only when the personal identification of the user is authenticated as the authorized owner by verifying the operation enable password. Subsequently, the main control unit 21 proceeds to Step S5 in the operation program PR, and displays a message on the display panel 6 to check whether the user wishes to register a new encryption or search the encryption that has been registered therein. Accordingly, the user selects either the registration or search of the encryption.

Because the encryption display card 1 is used for the first time, no encryption has been registered. Thus, the user selects the registration of the encryption. Then, the mode is switched to the encryption registration mode, and the main control unit 21 proceeds to Step S6 in the operation program PR, and displays a message on the display panel 6 to check whether the user wishes manual registration or automatic registration of the encryption. Accordingly, the user selects either the manual or automatic registration. If the user selects the manual registration, the main control unit 21 proceeds to Step S11 in the operation program PR, and displays messages sequentially on the display panel 6 to request the user to input label data and encryption data. Accordingly, the user inputs corresponding data by pushing the input keys 7. Then, the main control unit 21 displays the inputted label data and encryption data on the display panel 6. Subsequently, the main control unit 21 proceeds to Step S12 in the operation program PR, wherein the user confirms whether he or she has manipulated the input keys 7 correctly, and if the user has made a mistake, the user inputs data indicating so to the encryption display card 1 by manipulating the input keys 7. Then, the main control unit 21 returns to Step S11 in the operation program PR, and displays a message on the display panel 6 again to request the user to input the label data and encryption data. The user pushes the input keys 7 carefully this time and inputs the corresponding data again. When the label data and encryption data are inputted correctly, the main control unit 21 proceeds to Step S10 in the operation program PR, writes the label data in the RAM 3 as a label, and registers the encryption data in the RAM 3 as an encryption for the label in a one-to-one correspondence.

For example, as shown in Fig. 4, if the user inputs "Ginkouraberu", which literally represents a bank label, as the label data for a PIN of the bank cash card and "4682" as the encryption data, then the label "Ginkouraberu" and "4682" are stored in the RAM 3 as a pair.

In case that the user selects the automatic registration in response to the message in Step S6 in the operation program PR, then the main control unit 21 proceeds to Step S7 in the operation program PR, and displays messages on the display panel 6 sequentially to request the user to input the label data, and data related to distribution of numbers and characters forming the encryption (numbers alone, characters alone, or a combination thereof), and data relating to the digit number. Accordingly, the user inputs corresponding data by pushing the input keys 7, whereupon the main control unit 21 proceeds to Step S8 in the operation program PR, and directs the encryption generating unit 22 to generate an encryption. Then, the encryption generating unit 22 generates a random encryption based on the input data, and displays the generated encryption on the display panel 6. The main control unit 21 proceeds to Step S9 in the operation program PR, where the user decides whether to adopt the displayed encryption or not. If the user decides not to adopt the displayed encryption, he or she inputs data indicating so to the encryption display card 1 by manipulating the input keys 7, whereupon the main control unit 21 returns to Step S8 in the operation program PR, so that another random encryption is generated and displayed on the display panel 6. In this manner, random encryptions are repeatedly generated until the user adopts one. When the displayed encryption is adopted, the main control unit 21 proceeds to Step S10 in the operation program PR, and writes the adopted encryption in the RAM 3 to be registered therein in a one-to-one correspondence with the label.

For example, as shown in Fig. 4, if the user inputs "login" as the label data for a password used in accessing a network, such as a corporate LAN (local area network) or intranet, and wishes to obtain an encryption comprising a combination of 2-digit alphabet and 3-digit number, "IT270" is generated as a random encryption. Consequently, the label "login" and the encryption "IT270" are stored in the RAM 3 as a pair.

When an encryption has been stored in the RAM 3 in a one-to-one correspondence with a specific label either manually or automatically, the main control unit 21 proceeds to Step S16 in the operation program PR, and displays a message on the display panel 6 to confirm whether the user wishes to deactivate the encryption display card 1. If the user inputs the data indicating so to the encryption display card 1, the control circuit 2 is turned OFF and the encryption display card 1 is deactivated. On the other hand, if the user wishes to use the encryption display card 1 continuously (for example, the user may wish to register another pair of label and encryption or confirm whether the pair of label and encryption the user has inputted are registered correctly), he or she inputs data indicating not to deactivate the encryption display card 1 to the same. Then, the main control unit 21 returns to Step S1 in the operation program PR, so that the user can register second and following pairs of labels and encryptions in the same manner as above or search the encryption that has been registered.

In other words, because it is judged that the operation enable password has been set in Step S1 in the operation program PR, the main control unit 21 displays a message on the display panel 6 to request the user to make a selection other than the function of generating the operation enable initial password, that is, either the update or verification of the operation enable password. Because the user wishes to register an encryption or search the encryption, he or she selects the verification of the operation enable password. Then, the main control unit 21 proceeds to Step S17 in the operation program PR, and verifies the operation enable password. More specifically, the main control unit 21 judges whether the operation enable password the user has inputted by pushing the input keys 7 coincides with the operation enable password stored in the RAM 3. When both the operation enable passwords coincide with each other, the personal identification of the user is authenticated as the authorized owner; otherwise, the personal identification of the user is not authenticated as the authorized owner. However, as has been discussed above, the operation enable password data inputted in the Steps S2 and S3 in the operation program PR is directly written in the RAM 3 as the operation enable password, both the operation enable passwords coincide with each other as a matter of course and the personal identification of the user is authenticated as the authorized owner. Then, the main control unit 21 proceeds to Step S5 in the operation program PR, and displays a message on the display panel 6 to request the user to select either the registration or search of the encryption. Accordingly, the user selects either the registration or search of the encryption.

If the user selects the registration of the encryption, another pair of label and encryption are registered in accordance with the procedure from Steps S6 to S12 in the operation program PR as has been discussed. If the user selects the search of the encryption, the mode is switched to the encryption search mode. Then, the main control unit 21 proceeds to Step S13 in the operation program PR, and displays a message on the display panel 6 to request the user to input the label data. Accordingly, the user inputs the label data by pushing the input keys 7, whereupon the main control unit 21 proceeds to Step S14 in the operation program PR, and judges whether the label corresponding to the input label data has been stored in the RAM 3.

If the corresponding label is stored in the RAM 3, the main control unit 21 proceeds to Step S15 in the operation program PR, and displays the encryption corresponding to the label on the display panel 6, after which the main control unit 21 proceeds to Step S16 in the operation program PR, and as has been discussed, displays a message on the display panel 6 to check whether the user wishes to deactivate the encryption display card 1. In response to the instruction from the user, the main control unit 21 turns OFF the control circuit 2 or returns to Step S1 in the operation program PR.

If it is judged that the corresponding label is not stored in the RAM 3 in Step S14 in the operation program PR, then the user may not be the authorized owner. For this reason, the main control unit 21 proceeds to Step S17 in the operation program PR, and verifies the operation enable password again. The main control unit 21 authenticates the personal identification of the user as the authorized owner and proceeds to the following Step S5 and carries out the procedure afterward only when the input operation enable password and the stored operation enable password coincide with each other.

When the encryption display card 1 is used for the second time or beyond, the main control unit 21 proceeds to Step S1 in the operation program PR as the power source switch 8 is pushed, and judges whether the operation enable password has been set or not with reference to the RAM 3 in the manner discussed above. Because the operation enable password has been set when the encryption display card 1 was used for the first time, the main control unit 21 judges that the encryption display card 1 is used for the second time or beyond, and displays a message on the display panel 6 to request the user to select either the update or verification of the operation enable password. If the user selects the verification of the operation enable password, the main control unit 21 proceeds to Step S17 and following Steps in the operation program PR to register or search the encryption in the manner as discussed above. If the user selects the update of the operation enable password, the operation enable password that has been set can be readily updated in the following manner.

That is, when the user pushes the power source switch 8, the main control unit 21 proceeds to Step S1 in the operation program PR, and judges whether or not the operation enable password has been set with reference to the RAM 3. Because it is judged that the operation enable password has been already set, the main control unit 21 displays a message on the display panel 6 to request the user to select either the update or verification of the encryption in Step S1 in the operation program PR. If the user selects the update of the operation enable password, the mode is switched to the operation enable password update mode, and the main control unit 21 proceeds to Step S18 in the operation program PR, where it displays a message on the display panel 6 to request the user to input the current (before update) operation enable password data to authenticate the personal identification of the user as the authorized owner. Accordingly, the user inputs the current operation enable password data by pushing the input keys 7, whereupon the main control unit 21 proceeds to Step S19 in the operation program PR, and judges whether the operation enable password data the user has just inputted by pushing the input keys 7 coincides with the operation enable password stored in the RAM 3. If the former and the latter coincide with each other, the main control unit 21 authenticates the personal identification of the user as the authorized owner, and proceeds to Step S2 in the operation program PR to allow the user to update the operation enable password, that is, the main control unit 21 updates the operation enable password in accordance with the procedure discussed above. On the other hand, if the former and the latter do not coincide with each other, the user may not be the authorized owner. Thus, the main control unit 21 returns to Step S1 in the operation program PR, and displays a message on the display panel 6 again to request the user to select either the update or verification of the operation enable password.

As has been discussed, in order to use the encryption display card 1, the personal identification of the user is authenticated (whether the user is the authorized owner or not is confirmed) by verifying the operation enable password in the first security step, thereby preventing fraudulent use. Should a third party manage to pass this security step, the personal identification of the user is authenticated again in the second security level by checking the coincidence of labels to prevent fraudulent use by a third party. For example, the label "Ginkouraberu" (bank label) is given to the PIN of the bank cash card is the fact that is not known to anyone but the owner alone. Thus, by requesting the input of the label data each time the encryption is searched, the security is ensured in the second security step. Hence, the security is double ensured by the first and second security steps. Moreover, because the operation enable password, which plays a key role in securing the safety in the first security step, can be readily updated by the user at any time, the security of the encryption display card 1 can be further ensured by periodically updating the operation enable password.

In addition, the main body 9 of the encryption display card 1 is a thin plate of the size of a credit card. Thus, it can be placed in a card case, such as a pass holder, and readily carried around. Hence, different from the case where the encryption is managed by using the personal computer, the encryption display card 1 has excellent carryability. Moreover, the number of pairs of labels and encryptions stored in the RAM 3 of the encryption display card 1 is not especially limited. Thus, the user can add pairs as necessary, thereby making the encryption display card 1 particularly useful for individuals who have to manage a large number of private encryptions.

Further, if the user selects the automatic registration of the encryption, a random encryption unrelated to private information of the owner (birthday, address, telephone number, name, etc.) is registered. Thus, compared with a case where the encryption is determined in relation to the private information, the risk of decryption by a third party can be reduced significantly and the safety can be increased considerably. Moreover, the random encryption can be generated in the digit number the user wishes. Hence, any kind of encryptions can be generated, and this makes the encryption display card 1 quite useful.

In the above embodiment, the description display card 1 is the type that requests the user to input the operation enable password data by manipulating the input keys 7 when authenticating the personal identification of the user. However, any other personal identification authenticating system (for example, finger print authenticating system, or voice print authenticating system) can be adopted instead of the input manipulation of the operation enable password data as long as the carryability of the encryption display card 1 is not deteriorated. Further, if the safety can be ensured satisfactorily by checking the coincidence of the labels alone, the personal identification authenticating system by the input manipulation of the operation enable password data or the like can be omitted, so that the costs can be saved.

In addition, the above embodiment explained a case where the encryption display card 1 is provided with the input keys 7, which are used in common as the label input means, digits specifying means, and password input means. It should be appreciated, however, that the three means can be provided separately.

Further, the above embodiment explained a case where a non-volatile memory is used as the RAM 3, so that the data will not be lost when the power source is turned OFF. However, if a back-up power source (not shown) is provided, the non-volatile RAM 3 can be replaced with a volatile RAM.

As has been discussed, according to the present invention, in addition to the excellent carryability achieved by forming the main body into a thin plate, when the user wishes to register an encryption, a random encryption is generated and stored by merely inputting the label data, and on the other hand, when the user wishes to search an encryption, the target encryption is displayed by merely inputting the label data. Thus, it has become possible to provide a highly secure, easy-to-carry, and practically useful encryption display card.

Further, according to the other embodiment of the invention (as set forth in Claim 2), because a random encryption of a desired digit number is generated, the encryption display card can be more useful.

Also, according to a further embodiment of the invention (as set forth in Claim 3), the encryption display card is more useful when managing a great number of encryptions. Hence, the encryption display card is particularly useful for those who have to manage a great number of private encryptions.

In addition, according to another embodiment of invention (as set forth in Claim 5), fraudulent use by a third party can be prevented by setting the operation enable password data, thereby ensuring the safety of the encryption display card.

## Claims

1. An encryption display card characterized by comprising:
a main body (9) of a thin plate;
mode switching means (2) for switching between two modes including an encryption registration mode and an encryption search mode;
label input means (7) for accepting an input of label data;
encryption generating means (22) for, upon input of the label data through said label input means in the encryption registration mode, generating a random encryption for a label equivalent to the label data;
encryption storage means (3) for storing the encryption generated by said encryption generating means in a one-to-one correspondence with the label; and
display means (6) for, upon input of the label data through said label input means in the encryption search mode, displaying the encryption corresponding to the label equivalent to the label data with reference to said encryption storage means.

2. An encryption display card characterized by comprising:
a main body (9) of a thin plate;
mode switching means (2) for switching between two modes including an encryption registration mode and an encryption search mode;
label input means (7) for accepting an input of label data;
digit number specifying means (7) for accepting a specific digit number of an encryption;
encryption generating means (22) for, when the digit number of an encryption is specified through said digit number specifying means upon input of the label data through said label input means in the encryption registration mode, generating a random encryption of a specified digit number for a label equivalent to the label data;
encryption storage means (3) for storing the encryption generated by said encryption generating means in a one-to-one correspondence with the label; and
display means (6) for, upon input of the label data through said label input means in the encryption search mode, displaying the encryption corresponding to the label equivalent to the label data with reference to said encryption storage means.

3. The encryption display card according to Claim 1 or 2, wherein said encryption storage means (3) is capable of storing more than one encryption.

4. The encryption display card according to any preceding claim, wherein said encryption generating means (22) generates a random encryption by using a natural random number or a pseudo-random number.

5. The encryption display card according to any preceding claim, further comprising:
password input means (7) for accepting an input of operation enable password data; and
personal identification authenticating means (21) for, upon input of the operation enable password data through said password input means, storing the operation enable password data in password storage means (3) as an operation enable password when said encryption display card is used for a first time, said personal identification authenticating means also for, when said encryption display card is used for a second time or beyond, enabling operations thereafter only if input operation enable password data coincides with the operation enable password stored in said password storage means.
